# EUROPEAN PATENT APPLICATION

(11) **EP 2 587 431 A1**
(43) Date of publication of application: **01.05.2013**
(21) Application number: 12182846.1
(22) Date of filing: 03.09.2012
(51) Int. Cl.: G06Q 20/32

(54) **Visually conducting transactions**

(30) Priority: 31.10.2011 US 201113285386
(71) Applicant: NCR Corporation, Duluth, GA 30096 (US)
(72) Inventor: Kobres, Erick, Lawrenceville, GA 30043 (US)
(74) Representative: MacLeod, Roderick William

(57) **Abstract**

Techniques for visually conducting transactions are provided. According to an embodiment, a consumer conducts a transaction on an enterprise terminal device. A visual identifier encoded with the transaction is presented on a display of the terminal device (step 210). The consumer uses a mobile device to scan and acquire the visual identifier (step 111). A mobile app on the mobile device generates a visual transaction envelope having payment details for the consumer (step 140). The visual transaction envelope may be scanned from the display of the mobile device into the terminal device, via a scanner of the terminal device (step 151). The transaction is completed (step 240).

## Description

Consumers are increasingly using kiosks to conduct business with enterprises. The kiosks come in a variety of sizes and are used for a variety of purposes. Some kiosks are drive through, such as fast food establishments, pharmacies, banks, and the like. Other kiosks are stationary located in gas stations, airlines, grocery stores, department stores, and the like.

In addition, what is considered a kiosk is evolving with today's technology. For example, digital signs now provide advertisements and mechanisms for users to interact with the displays to perform transactions. Such mechanisms include blue tooth communication, Near Field Communication (NFC), Quick Response (QR) code scanning, WiFi communication, and the like.

So, increasingly customers are engaging in a variety of technologies to automatically interact with enterprises to perform transactions. The transactions may result in purchases or may result in such things as registration for loyalty programs, enrolling in promotional events, requesting additional information for a good or service, and others. That is, the transactions via these kiosks are not strictly tied to purchases although some transactions are purchase related.

The NFC technologies are increasingly becoming popular for automating consumer transactions. However, there are several issues associated with adoption of NFC technologies. Presently, NFC is a fragmented body of standards, which are not unified, and which have poor industry adoption and cross-industry support. Additionally, NFC adoption requires specialized hardware in every mobile device or credit card as well as on each point of service terminal for enterprises.

Therefore, NFC adoption is years away from full and successful deployment and it is not entirely clear as of yet if such a full scale deployment will or can occur.

In various embodiments, techniques for visually conducting automated transactions are presented. According to an embodiment, a method for visually conducting an automated transaction with an enterprise system is provided.

Specifically, a visual identifier is obtained for a transaction that is defined and is awaiting completion, the visual identifier acquired from a terminal device of an enterprise by a mobile app of a mobile device of a customer. Next, the mobile app decodes the visual identifier to obtain details for the transaction. Then, the mobile app confirms or augments the details for the transaction on the mobile device. The mobile app then generates a visual transaction envelope for completing the transaction on the terminal device. Finally, the mobile app provides the visual transaction envelope to the terminal device to conclude the transaction.

According to a first aspect of the present invention there is provided a method implemented on a mobile device, the method comprising: obtaining from a terminal device of an enterprise a visual identifier for a transaction that is defined and is awaiting completion; decoding the visual identifier to obtain details for the transaction; confirming or augmenting the details; generating a visual transaction envelope for completing the transaction on the terminal device; and providing the visual transaction envelope to the terminal device to conclude the transaction.

According to a second aspect of the present invention there is provided a method implemented on a terminal device, the method comprising: presenting a visual identifier for a transaction on a display of the terminal device; receiving a visual transaction envelope from a mobile device of a customer associated with the transaction; decoding the visual transaction envelope to obtain details for completing the transaction with the customer; and completing the transaction with the customer in accordance with the details.

According to a third aspect of the present invention there is provided a processor-implemented method programmed in a non-transitory processor-readable medium and to execute on one or more processors of a mobile device configured to execute the method, comprising: obtaining, via the mobile device, a visual identifier for a transaction that is defined and is awaiting completion, the visual identifier acquired from a terminal device of an enterprise; decoding, on the mobile device, the visual identifier to obtain details for the transaction; confirming or augmenting, on the mobile device, the details; generating, on the mobile device, a visual transaction envelope for completing the transaction on the terminal device; and providing, via the mobile device, the visual transaction envelope to the terminal device to conclude the transaction.

Optionally, obtaining a visual identifier for a transaction further includes scanning, via a camera of the mobile device the visual identifier from a display of the terminal device.

Optionally, scanning the visual identifier further includes scanning the visual identifier as encrypted information represented as one of: a barcode, a Quick Response (QR) code, machine text that is unreadable by a human, human readable text, an animation, a pattern of images, a pattern of flashes, and a pattern of text characters.

Optionally, decoding the visual identifier to obtain details for the transaction further includes decrypting the visual identifier using digital certificates and/or digital signatures.

Optionally, decrypting the visual identifier further includes acquiring the digital certificates and/or digital signatures remotely over a network connection from a mobile transaction service.

Optionally, decoding the visual identifier to obtain details for the transaction further includes decrypting the visual identifier to obtain details for the transaction as one or more of: a unique transaction identifier (ID), a time, a date, a specific cashier lane, a specific cashier, transaction totals, unique service ID for a service provider associated with the terminal device, a geographic location for the transaction, and a transaction type.

Optionally, confirming or augmenting the details further includes confirming by the customer, via the mobile device, a cash withdrawal amount for a pre-staged Automated Teller Machine (ATM) transaction, the terminal device is the ATM.

Optionally, confirming or augmenting the details further includes adding by the customer, via the mobile device, payment details for completing the transaction, the payment details included in the visual transaction envelope.

Optionally, generating a visual transaction envelope further includes encrypting and/or signing the visual transaction envelope using digital certificates and/or digital signatures.

Optionally, encrypting and/or signing the visual transaction envelope further includes remotely obtaining the digital certificates and/or digital signatures from a mobile transaction service over a network connection.

Optionally, providing the visual transaction envelope to the terminal device further includes scanning the visual transaction envelope into a camera associated with the terminal device.

Optionally, providing the visual transaction envelope to the terminal device further includes transmitting over a network connection the visual transaction envelope to a remote mobile transaction service that also communicates the visual transaction envelope to the terminal device to complete the transaction.

According to a fourth aspect of the present invention there is provided a processor-implemented method programmed in a non-transitory processor-readable medium and to execute on one or more processors of a terminal device configured to execute the method, comprising: presenting, at the terminal device, a visual identifier for a transaction, the visual identifier presented on a display of the terminal device; receiving, at the terminal device, a visual transaction envelope generated on a mobile device of a customer associated with the transaction; decoding, on the terminal device, the visual transaction envelope to obtain details for completing the transaction with the customer; and completing, on the terminal device, the transaction with the customer in accordance with the details.

Optionally, the method further comprises transmitting, from the terminal device, a transaction receipt, the transaction receipt sent from the terminal device to the mobile device of the customer.

Optionally, the method further comprises transmitting, from the terminal device, a transaction receipt, the transaction receipt sent from the terminal device to a remote mobile transaction service that then delivers the transaction receipt to the mobile device of the customer.

Optionally, the method further comprises presenting, via the terminal device and on the display an interactive video presentation of the completed transaction to the customer for instant feedback from the customer on completion of the transaction.

Optionally, presenting the visual identifier for a transaction further includes displaying the visual identifier as encoded image data on the display that is scanned into the mobile device via a camera of the mobile device.

Optionally, receiving a visual transaction envelope further includes identifying at least a portion or the entire visual transaction envelope as being provided to the mobile device from a mobile transaction service, where the transaction is a previously staged cash withdrawal from an Automated Teller Machine (ATM) and the terminal device is the ATM.

According to a fifth aspect of the present invention there is provided a processor-implemented method programmed in a non-transitory processor-readable medium and to execute on one or more processors of a server configured to execute the method, comprising: receiving, via the server, a request for certificates and/or signatures for using in an automated visual transaction between a mobile device of a customer and a terminal device of an enterprise; authenticating, at the server, the request; and delivering, from the server, the certificates and/or signatures to the mobile device and/or terminal device for the mobile device and terminal device to complete a transaction.

Optionally, the method further comprises one or more of: receiving, at the server, a transaction receipt for the transaction; delivering, from the server, the transaction receipt to the mobile device; and generating, at the server, a visual transaction envelope for a customer of the mobile device when the transaction is related to a cash withdrawal and when the terminal device is an Automated Teller Machine (ATM).

These and other aspects of the present invention will be apparent from the following specific description, given by way of example, with reference to the accompanying drawings, in which:

FIG. 1 is a diagram of a method for visually conducting an automated transaction with an enterprise system, according to an example embodiment;

FIG. 2 is a diagram of another method for visually conducting an automated transaction with an enterprise system, according to an example embodiment; and

FIG. 3 is a diagram of yet another method for visually conducting an automated transaction with an enterprise system, according to an example embodiment.

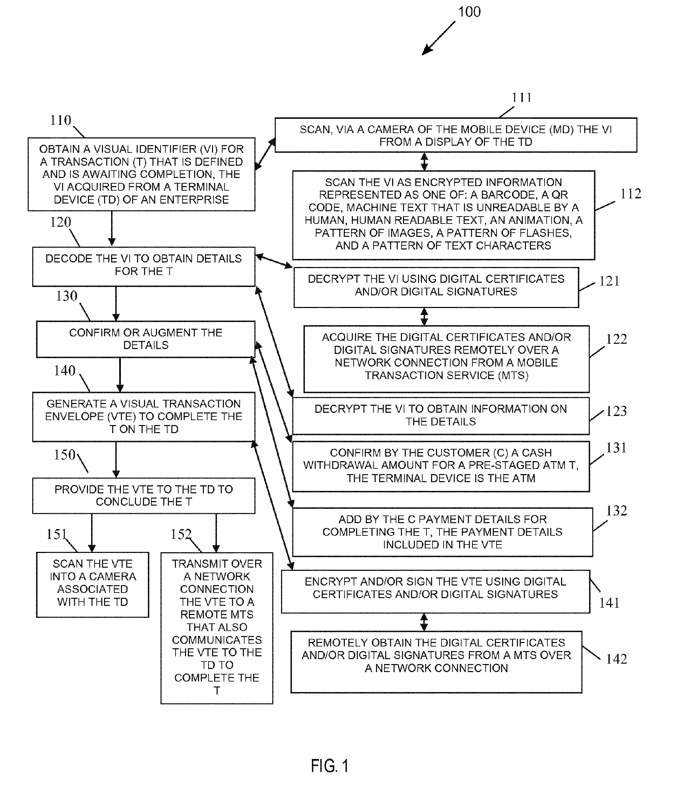

FIG. 1 is a diagram of a method 100 for visually conducting an automated transaction with an enterprise system, according to an example embodiment. The method 100 (herein after "mobile app") is implemented in non-transitory computer-readable storage medium for execution on one or more processing devices of a mobile device (*e.g*., phone, tablet, laptop, etc.) that is configured to execute the mobile app. The mobile app is also enabled to operate and communicate over one or more network connections, via the mobile device. The networks can be wired, wireless, or a combination of wired and wireless.

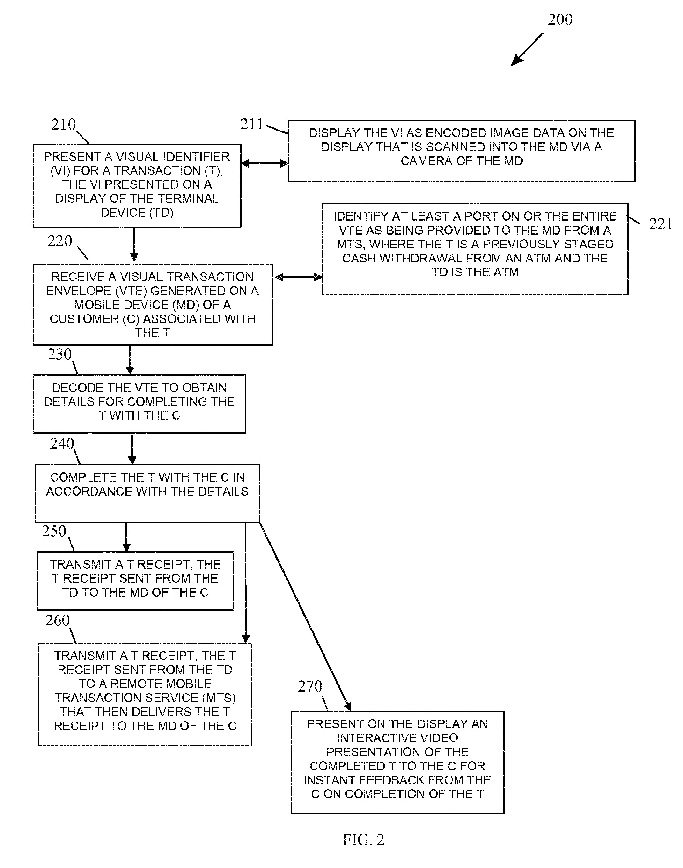

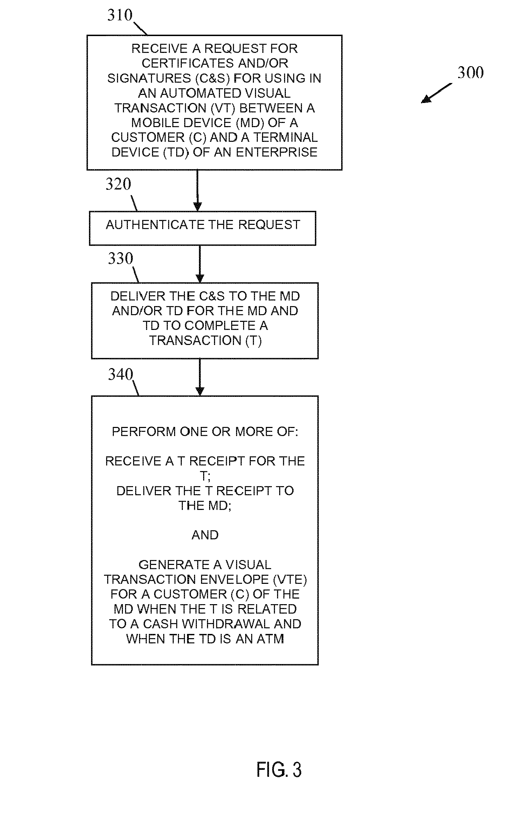

The mobile app is presented from the processing perspective of a customer's mobile device where the mobile app operates. The processing perspective of an enterprise terminal device is presented below with reference to the FIG. 2. Moreover, the processing perspective of a third-party mobile transaction service that may exist in some embodiments is presented below with reference to the FIG. 3.

It is noted that a terminal device is a device used by an enterprise to conduct a transaction; so, a terminal device can be a self-service kiosk, a cashier-manned terminal, a digital sign, or even a portable device such as a tablet that the enterprise uses to conduct transactions.

Initially, and before discussion of the components of the mobile app and the processing of the FIGS. 1 and 2 some example scenarios and situations of the invention are presented for purposes of illustration and comprehension. It is noted that other situations may exist and that the situations presented are presented for purposes of illustration and comprehension only.

The embodiments herein utilizing the existing built-in camera and scanning capabilities of mobile devices, such as phones and tablets, and enterprise terminal devices (point-of-sale devices located in or near enterprise establishments and be mobile devices such as laptops or tablets). These existing devices (cameras) and features (scan capabilities) can be used to augment what NFC alleges to provide and can provide instant wide spread adoption in the industry with minimal effort to deploy.

The embodiments herein provide for:

1) Point-Of-Service (POS) software to display a digitally signed POS visual identifier (POS software) may also be referred to herein as "terminal device app" - discussion of this is provided in greater detail with reference to the FIG. 2 below);

2) mobile applications (for smart phones and tablets - referred to as "mobile app" and discussed herein with reference to the FIG. 1) to: a) acquire and decode the visual service identifier and initiate a transaction with the POS (terminal device of an enterprise); b) securely host necessary certificates and credentials of the entities transacting; and c) generate and display a visual transaction envelope that can be read and decoded by the POS software (terminal device app);

3) optionally, hosted applications to communicate with the mobile device Over-The-Air (OTA), enabling the same functionality (over the air) for points of service without the ability to acquire the visual transaction envelope, phones without ability to host certificates, etc. (this is discussed below with reference to the mobile transaction service discussed with the FIG. 3).

The visual service identifier and visual transaction envelope can be implemented as any form of digitally displayed information such as a two-dimensional (2D) barcode, Quick Response (QR code), machine or human readable text, animation, pattern of flashes, etc. The essential aspects of the visual elements are the ability of the mobile devices, via the mobile app, to convert the visual information to digital information.

Utilizing these components, the embodiments herein provide solutions for visually transacting that can provide NFC-like experiences to consumers without NFC hardware.

Here are some example use-cases; again, presented for purposes of illustration only as other situations can exist as well.

### Use case 1 - Mobile payment at a POS (enterprise terminal device):

1) Consumer completes transaction as normal on POS device (enterprise terminal device).

2) POS System (terminal device via terminal device app) displays a screen on the customer display of the POS device instructing the user (user, consumer, and customer may be used interchangeably and synonymously herein) to scan the visual service identifier along with the digitally signed visual service identifier itself containing:

A) Transaction details (unique transaction Identifier (ID), time, date, lane, cashier, etc.)

B) Transaction totals.

C) Unique identification of the service provider, location and specific point of service.

3) Consumer opens his/her payment application, which prompts the consumer to scan the visual identifier on the screen through a typical camera overlay commonly used to capture barcodes or similar content (achieved via the mobile device of the consumer).

4) Consumer scans the visual service identifier.

5) The mobile device presents a summary of the transaction to the consumer, via the mobile app (discussed herein with reference to the FIG. 1).

6) The consumer selects the payment method, enters his/her Personal Identification Number (PIN), provides biometric data (optionally and in some embodiments), etc. to confirm the transaction.

7(a) The mobile device presents instructions to present the visual transaction envelope to the payment terminal (enterprise terminal device) as well as the visual transaction envelope, containing digitally signed and encrypted:

7(a)(1) Transaction ID.

7 (a)(2) Payment information (card data).

7 (a)(3) (optionally) Customer loyalty card or other information.

The payment terminal or point of service device (enterprise terminal device) displays a live-video display to the customer for feedback on the presentation of the visual transaction envelope. This may be an optional feature as well.

7(b) Optionally, the envelope is transmitted OTA or wirelessly to the bank's back-end system and there is no need to present a bar-code to the Point of Sale (POS) system.

8) Once the envelope is read, payment is confirmed and the transaction completes as normal.

9) Alternatively, a visual service identifier containing a digital version of the receipt is displayed and can be acquired.

### Use case 2 - Pre-staged ATM transaction:

1) Consumer launches a mobile app or visits a bank mobile web-site, and initiates a planned transaction (such as a cash withdrawal).

2) Customer visits an ATM location.

3) The ATM attract screen displays a visual service identifier including digitally signed information about the location of the ATM, the bank ID, etc. and invites the consumer to scan the identifier to initiate a transaction.

4) Consumer opens their banking application which prompts an action to scan the visual identifier on the screen through a typical camera overlay commonly used to capture barcodes or similar content, via a mobile device camera of the consumer.

5) Consumer scans the visual service identifier.

6) The mobile device presents a summary of the transaction to the consumer.

7) The consumer confirms the information, enters their PIN, provides biometric data (optional), etc. to confirm the transaction.

8(a)The mobile device presents instructions to present the visual transaction envelope to the ATM as well as the visual transaction envelope, including the digitally signed and encrypted:

8(a)(1) Transaction ID.

8(a)(2) Payment information (card data).

8(a)(3) (optionally) Customer loyalty card or other information.

The payment terminal or point of service device displays a live-video display to the customer for feedback on the presentation of the visual transaction envelope. This can be an optional beneficial embodiment of the techniques presented herein.

8(b) Optionally, the envelope is transmitted OTA or wirelessly to the bank's back-end system and there is no need to present a bar-code to the ATM.

9) Once the envelope is read, the transaction is confirmed and the transaction completes as normal, with the customer receiving the cash requested.

10) Alternatively, a visual service identifier containing a digital version of the receipt is displayed and can be acquired.

As will be demonstrated in the discussions that follow with reference to the FIGS. 1-3, with the approaches herein there is no need for expensive NFC infrastructure on mobile devices; there is an ability to roll out new technology and security updates without having to touch the silicon or other hardware on the POS device (enterprise terminal device) or mobile phone; and the techniques can be implemented and rolled out relatively quickly and on currently available hardware of industry devices.

Now referring to the FIG. 1 and the processing associated with the mobile app.

At 110, the mobile app obtains a visual identifier for a transaction that is defined for a transaction. The transaction is defined and is awaiting completion. The visual identifier acquired from a terminal device of an enterprise. The terminal device may be a self-service kiosk, a cashier driven terminal, an ATM, a digital sign, a tablet, a laptop, a desktop computer, and the like.

According to an embodiment, at 111, the mobile app scans, via a camera of the mobile device the visual identifier from a display of the terminal device.

Continuing with the embodiment of 111 and at 112, the mobile app scans the visual identifier as encrypted and encoded information represented as one of: a barcode, a QR code, machine text that is unreadable by a human, human readable text, an animation, a pattern of images, a pattern of flashes, a pattern of text characters, a pattern of symbols, and the like.

At 120, the mobile app decodes the visual information to obtain details for the transaction occurring between the customer and the terminal device.

In an embodiment, at 121, the mobile app decrypts the visual information using digital certificates and/or digital signatures.

Continuing with the embodiment of 121 and at 122, the mobile app acquires the digital certificates and/or digital signatures remotely over a network connection from a mobile transaction service (discussed below with reference to the FIG. 3).

In another case, at 123, the mobile app decrypts the visual information to obtain information on the details.

At 130, the mobile app confirms and/or augments the details for the transaction.

For example, at 131, the mobile app confirms, via the customer, a cash withdrawal amount for a pre-staged ATM transaction, where the ATM is the terminal device.

In another example, at 132, the mobile app adds, via the customer, the customer payment details for completing the transaction. The payment details included in the visual transaction envelope (discussed below at 140).

At 140, the mobile app generates a visual transaction envelope to complete the transaction on the terminal device.

According to an embodiment, at 141, the mobile app encrypts and/or signs the visual transaction envelope using digital certificates and/or digital signatures.

Continuing with the embodiment of 141 and at 142, the mobile app remotely obtains the digital certificates and/or digital signatures from a mobile transaction service (discussed below with reference to the FIG. 3) over a network connection.

At 150, the mobile app provides the visual transaction envelope to the terminal device to conclude the transaction.

According to an embodiment, at 151, the mobile app scans the visual transaction envelope into a camera associated with the terminal device.

In another situation, at 152, the mobile app transmits, over a network connection, the visual transaction envelope to a remote mobile transaction service (discussed below with reference to the FIG. 3). The mobile transaction service also communicates the visual transaction envelope to the terminal device to complete the transaction. This embodiment is useful to remote acquire at an ATM a staged transaction to process it at the ATM on behalf of the customer using a mobile device.

FIG. 2 is a diagram of another method 200 for visually conducting an automated transaction with an enterprise system, according to an example embodiment. The method 200 (hereinafter "terminal device app") is implemented as instructions programmed and residing on a non-transitory computer-readable (processor-readable) storage medium and executed by one or more processors of an enterprise POS terminal device. The processors are specifically configured and programmed to process the terminal device app. The terminal device app operates over one or more networks. The networks are wired, wireless, or a combination of wired and wireless.

The terminal device app is presented from the processing perspective of a POS terminal device of an enterprise that interacts with the mobile app of a mobile device of a customer, as presented above with reference to the FIG. 1.

At 210, the terminal device app presents a visual identifier for a transaction. The visual identifier presented on a display of the terminal device. The terminal device processes the terminal device app.

In an embodiment, at 211, the terminal device app displays the visual identifier as encoded image data on the display, which is scanned into the mobile device via a camera of the mobile device.

At 220, the terminal device app receives a visual transaction envelope generated on a mobile device of a customer, which is transaction in a transaction with the terminal device, via the terminal device app.

According to an embodiment, at 221, the terminal device app identifies at least a portion or the entire visual transaction envelope as being provided to the mobile device from a mobile transaction service (discussed below with reference to the FIG. 3). This is when the transaction was previously staged as a cash withdrawal from an ATM and the terminal device is the ATM.

At 230, the terminal device app decodes the visual transaction envelope to obtain details for completing the transaction with the customer.

At 240, the terminal device app completes the transaction with the customer in accordance with the details decoded from the visual transaction envelope.

In an embodiment, at 250, the terminal device app transmits a transaction receipt where the transaction receipt is sent from the terminal device to the mobile device of the customer.

In another scenario, at 260, the terminal device app transmits a transaction receipt for the transaction where the transaction receipt is sent from the terminal device to a remote mobile transaction service (discussed below with reference to the FIG. 3), which then delivers the transaction receipt to the mobile device of the customer. This is useful when the terminal device is an ATM but can also be used when the terminal device is a self-service kiosk or even a cashier-manned terminal.

In an embodiment, at 270, the terminal device app presents on the display an interactive video presentation for the completed transaction to the customer for purposes of acquiring instant feedback from the customer on the completion of the transaction via the visual methodology discussed herein.

FIG. 3 is a diagram of yet another method 300 for visually conducting an automated transaction with an enterprise system, according to an example embodiment. The method 300 (hereinafter "mobile transaction service") is implemented as instruction and programmed within a non-transitory computer-readable (processor-readable) storage medium that executes on one or more processors of a server (*e.g*., can be cloud-based environment, etc.); the processors of the server are specifically configured to execute the mobile transaction service. The mobile transaction service is operational over one or more networks; the networks are wired, wireless, or a combination of wired and wireless.

The mobile transaction service is provided by an enterprise, it may be the same enterprise as that which is associated with the terminal device (discussed above with reference to the FIG. 2) or it may be a third-party enterprise that is providing service features for visual transactions to a specific other enterprise and a consumer. The mobile transaction service is an optional embodiment. That is, the mobile app of the FIG. 1 and the terminal device app of the FIG. 2 can exists together independent of the mobile transaction service.

At 310, the mobile transaction service receives a request for certificates and/or signatures for using an automated visual transaction between a mobile device of a customer and a terminal device of an enterprise. This process was discussed above with reference to the FIGS. 1 and 2.

At 320, the mobile transaction service authenticates the request.

At 330, the mobile transaction service delivers the certificates and/or signatures to the mobile device and/or terminal device for the mobile device and the terminal device to complete the transaction.

According to an embodiment, at 340, the mobile transaction service can also perform one or more of: receiving a transaction receipt for the transaction; delivering the transaction receipt to the mobile device; and/or generating a visual transaction envelope for the customer of the mobile device when the transaction is related to a cash withdrawal previously staged and when the terminal device is an ATM that is to dispense the cash to the customer.

The above description is illustrative, and not restrictive. Many other embodiments will be apparent to those of skill in the art upon reviewing the above description. The scope of embodiments should therefore be determined with reference to the appended claims.

In the foregoing description of the embodiments, various features are grouped together in a single embodiment for the purpose of streamlining the disclosure. This method of disclosure is not to be interpreted as reflecting that the claims have more features than are expressly recited in each claim.

## Claims

1. A method implemented on a mobile device, the method comprising:
obtaining from a terminal device of an enterprise a visual identifier for a transaction that is defined and is awaiting completion (step 110);
decoding the visual identifier to obtain details for the transaction (step 120);
confirming or augmenting the details (step 130);
generating a visual transaction envelope for completing the transaction on the terminal device (step 140); and
providing the visual transaction envelope to the terminal device to conclude the transaction (step 150).

2. The method of claim 1, wherein obtaining the visual identifier for a transaction further includes scanning the visual identifier from a display of the terminal device (step 111).

3. The method of claim 2, wherein scanning the visual identifier from a display of the terminal device further includes scanning the visual identifier as encrypted information represented as one of: a barcode, a Quick Response code, machine text that is unreadable by a human, human readable text, an animation, a pattern of images, a pattern of flashes, and a pattern of text characters (step 112).

4. The method of any preceding claim, wherein decoding the visual identifier to obtain details for the transaction further includes decrypting the visual identifier using digital certificates and/or digital signatures (step 121).

5. The method of claim 4, wherein decrypting further includes acquiring the digital certificates and/or digital signatures remotely over a network connection from a mobile transaction service (step 122).

6. The method of any preceding claim, wherein decoding the visual identifier to obtain details for the transaction further includes decrypting the visual identifier to obtain details for the transaction as one or more of: a unique transaction identifier (ID), a time, a date, a specific cashier lane, a specific cashier, transaction totals, unique service ID for a service provider associated with the terminal device, a geographic location for the transaction, and a transaction type (step 123).

7. The method of any preceding claim, wherein confirming or augmenting the details further includes confirming by the customer, via the mobile device, a cash withdrawal amount for a pre-staged Automated Teller Machine (ATM) transaction, the terminal device being the ATM (step 131).

8. The method of any preceding claim, wherein confirming or augmenting the details further includes adding by the customer, via the mobile device, payment details for completing the transaction, the payment details being included in the visual transaction envelope (step 132).

9. The method of any preceding claim, wherein generating the visual transaction envelope further includes encrypting and/or signing the visual transaction envelope using digital certificates and/or digital signatures (step 141).

10. The method of claim 9, wherein encrypting and/or signing further include remotely obtaining the digital certificates and/or digital signatures from a mobile transaction service over a network connection (step 142).

11. The method of any preceding claim, wherein providing the visual transaction envelope to the terminal device further includes scanning the visual transaction envelope into a camera associated with the terminal device (step 151).

12. The method of any preceding claim, wherein providing the visual transaction envelope to the terminal device further includes transmitting over a network connection the visual transaction envelope to a remote mobile transaction service that also communicates the visual transaction envelope to the terminal device to complete the transaction (step 152).

13. A method implemented on a terminal device, the method comprising:
presenting a visual identifier for a transaction on a display of the terminal device (step 210);
receiving a visual transaction envelope from a mobile device of a customer associated with the transaction (step 220);
decoding the visual transaction envelope to obtain details for completing the transaction with the customer (step 230); and
completing the transaction with the customer in accordance with the details (step 240).

14. The method of claim 13 further comprising transmitting a transaction receipt to the mobile device of the customer (step 250).

15. The method of claim 13 further comprising transmitting a transaction receipt to a remote mobile transaction service for subsequent delivery of the transaction receipt to the mobile device of the customer (step 260).

## Amended claims

### Amended claims in accordance with Rule 137(2) EPC.

**1.** A method implemented on a mobile device, the method comprising:
obtaining from an ATM a visual identifier for the ATM;
decoding the visual identifier to initiate a pre-staged ATM transaction;
confirming or augmenting the details including confirming a withdrawal amount for the transaction (step 131);
generating a visual transaction envelope for completing the transaction on the ATM (step 140); and
providing the visual transaction envelope to the ATM to conclude the transaction (step 150).

**2.** The method of claim 1, wherein obtaining the visual identifier for a transaction further includes scanning the visual identifier from a display of the ATM (step 111).

**3.** The method of claim 2, wherein scanning the visual identifier from a display of the ATM further includes scanning the visual identifier as encrypted information represented as one of: a barcode, a Quick Response code, machine text that is unreadable by a human, human readable text, an animation, a pattern of images, a pattern of flashes, and a pattern of text characters (step 112).

**4.** The method of any preceding claim, wherein decoding the visual identifier to obtain details for the ATM includes decrypting the visual identifier using digital certificates and/or digital signatures (step 121).

**5.** The method of claim 4, wherein decrypting further includes acquiring the digital certificates and/or digital signatures remotely over a network connection from a mobile transaction service (step 122).

**6.** The method of any preceding claim, wherein decoding the visual identifier to obtain details for the transaction further includes decrypting the visual identifier to obtain details for the transaction as one or more of: a unique transaction identifier (ID), a time, a date, transaction totals, unique service ID for a service provider associated with the ATM, a geographic location for the transaction, and a transaction type (step 123).

**7.** The method of any preceding claim, wherein generating the visual transaction envelope further includes encrypting and/or signing the visual transaction envelope using digital certificates and/or digital signatures (step 141).

**8.** The method of claim 7, wherein encrypting and/or signing further include remotely obtaining the digital certificates and/or digital signatures from a mobile transaction service over a network connection (step 142).

**9.** The method of any preceding claim, wherein providing the visual transaction envelope to the terminal device further includes scanning the visual transaction envelope into a camera associated with the ATM (step 151).

**10.** The method of any preceding claim, wherein providing the visual transaction envelope to the ATM further includes transmitting over a network connection the visual transaction envelope to a remote mobile transaction service that also communicates the visual transaction envelope to the ATM to complete the transaction (step 152).
